**Europäisches Patentamt**

**European Patent Office**

**Office européen des brevets**

(11) Veröffentlichungsnummer: **0 662 776 A2**

## (12) EUROPÄISCHE PATENTANMELDUNG

(21) Anmeldenummer: **94119639.6**

(22) Anmeldetag: **13.12.94**

(51) Int. Cl.6: **H04Q 7/36**, H04Q 7/30, H04B 7/26

(30) Priorität: **07.01.94 DE 4400331**

(43) Veröffentlichungstag der Anmeldung:
**12.07.95 Patentblatt 95/28**

(84) Benannte Vertragsstaaten:
**DE FR GB IT SE**

(71) Anmelder: **Alcatel SEL Aktiengesellschaft**
**Lorenzstrasse 10**
**D-70435 Stuttgart (DE)**

(72) Erfinder: **Gödecker, Reinhold**
**Alemannenstrasse 25/1**
**D-71272 Renningen (DE)**

(74) Vertreter: **Knecht, Ulrich Karl et al**
**Alcatel SEL AG,**
**Patent- und Lizenzwesen,**
**Postfach 30 09 29**
**D-70449 Stuttgart (DE)**

(54) **Funkzellen-Erweiterung.**

(57) In zellularen Funknetzen mit TDMA-Funkübertragung ist durch die maximale Signallaufzeit innerhalb einer Funkzelle deren Ausdehnung auf einen maximalen Radius begrenzt, z.B. auf 35 km bei GSM.

Zur Erweiterung der Funkzelle schlägt die Erfindung eine Funkfeststation (BTS) mit einem TDMA-Funkempfänger (RX) und einem zusätzlichen TDMA-Funkempfänger (RXe) vor, welcher zeitlich dem ersten nacheilend TDMA-Funkimpulse von solchen Mobilstationen (MS3) empfängt, die sich außerhalb der Funkzellen (C) befinden. Dadurch versorgt die Funkfeststation (BTS) eine erweiterte Funkzelle (Ce) innerhalb der jedoch nur die maximale Signallaufzeit kompensiert werden muß, die der max. Ausdehnung der (kleinen) Funkzelle (C) entspricht.

FIG.1A

Die Erfindung betrifft eine Funkfeststation für ein zellulares Funknetz nach dem Oberbegriff des Patentanspruchs 1.

Eine derartige Funkfeststation ist im Buch "The GSM-System for Mobile Communications" von M. Mouly und M.-B. Pautet beschrieben, das im Eigenverlag, 49, rue Louise Brunea, F-91120 Palaiseau, Frankreich, 1992 erschienen ist. Dort wird eine Funkfeststation für das zellulare Funknetz GSM (Global System for Mobile Communications) beschrieben, die nach dem TDMA-Funkübertragungsverfahren (Time Division Multiple Access) Funkimpulse mit Mobilstationen innerhalb einer Funkzelle austauscht. Im Kapitel 6.1.5.2 "Timing Advance" wird beschrieben, wie die Signallaufzeit der TDMA-Funkimpulse innerhalb der Zelle dadurch ausgeglichen werden, daß beim Senden dieser Funkimpulse von der Mobilstation ein sogenanntes "Timing Advance" berücksichtigt wird. Dieses ist eine Zeitspanne um die die TDMA-Funkimpulse von der Mobilstation voreilend zur Zeitschlitzfolge innerhalb der Funkfeststation gesendet werden. Das Timing Advance kann zwischen 0 $\mu s$ und 233 $\mu s$ verändert werden, was zur Kompensation von gleich großen Signallaufzeiten innerhalb der Funkzelle dient. Die Ausdehnung der Funkzelle ist auf einen maximalen Radius von 35 km entsprechend der maximalen Signallaufzeit von 233 $\mu s$ begrenzt. Die Begrenzung der Funkzelle ist in dem beschriebenen GSM-Funknetz auf eine Begrenzung in der Kodierung des Timing Advance zurückzuführen. Funkimpulse von Mobilstationen außerhalb dieser Funkzelle können nicht empfangen werden. Um eine gewünschte Vergrößerung der Funkzelle zu erzielen, schlägt das Buch vor, nur jeden zweiten Zeitschlitz innerhalb der Zeitschlitzfolge zu belegen, was einer Vergrößerung der Schutzzeiten zwischen den Funkimpulsen gleichkommt. Diese Maßnahme jedoch benötigt eine Änderung des Empfangsverfahrens in der Funkfeststation, wie die Autoren auf S. 347 selbst bemerken. Weiterhin führt diese Maßnahme dazu, daß nur die halbe Kanalkapazität für eine Funkübertragung genutzt werden kann. Maßnahmen, die diese Probleme umgehen, werden in dem Buch nicht angesprochen.

In der australischen Patentanmeldung PM 2427 vom 15. Nov. 1993 wird vorgeschlagen, die TDMA-Funkfeststation mit zwei Empfängern auszustatten, die auf einer Empfangsfrequenz, aber um die max. Signallaufzeit zeitversetzt zueinander, empfangen. Dadurch empfängt der eine Empfänger die TDMA-Funkimpulse von Mobilstationen innerhalb der Funkzelle und der andere Empfänger die TDMA-Funkimpulse von Mobilstationen außerhalb der Funkzelle. Somit ist der Versorgungsbereich der TDMA-Funkfeststation auf eine erweiterte Funkzelle mit doppeltem Zellradius vergrößert. Die TDMA-Funkimpulse, die die Mobilstationen aussenden, können jedoch am Empfangsort, d.h. am Standort der Funkfeststation miteinander kollidieren. Dadurch entstehen Interferenzen zwischen den TDMA-Funkkanälen.

Aufgabe der Erfindung ist es eine Funkfeststation und Mittel für eine TDMA-Funkübertragung innerhalb einer Funkzelle bereitzustellen, die eine einfache Erweiterung der Funkzelle unter Umgehung der oben genannten Probleme ermöglicht.

Die Aufgabe wird gelöst durch eine Funkfeststation mit den Merkmalen des Anspruchs 1 und durch eine TDMA-Zeitsteuerung mit den Merkmalen des Anspruchs 4.

Demnach wird eine Funkfeststation für ein zellulares Funknetz vorgeschlagen, die zusätzlich zum (herkömmlich einen) TDMA-Funkempfänger mindestens einen weiteren TDMA-Funkempfänger enthält, der auf der gleichen Trägerfrequenz wie ersterer empfängt, jedoch um mindestens die Zeitspanne nacheilend, die der maximalen Signallaufzeit entspricht.

Die Zeitschlitzzuweisung wird von einer mit der Funkfeststation verbundenen TDMA-Zeitsteuerung gesteuert, indem diese den Mobilstationen innerhalb und außerhalb der Funkzelle zum Senden der TDMA-Funkimpulse jeweils solche der Zeitschlitze zuweist, die zueinander benachbart sind, wodurch die Funkfeststation die TDMA-Funkimpulse möglichst vieler Mobilstationen innerhalb einer erweiterten Funkzelle empfängt.

Vorteilhafte Ausgestaltungen der Erfindung sind den Unteransprüchen zu entnehmen.

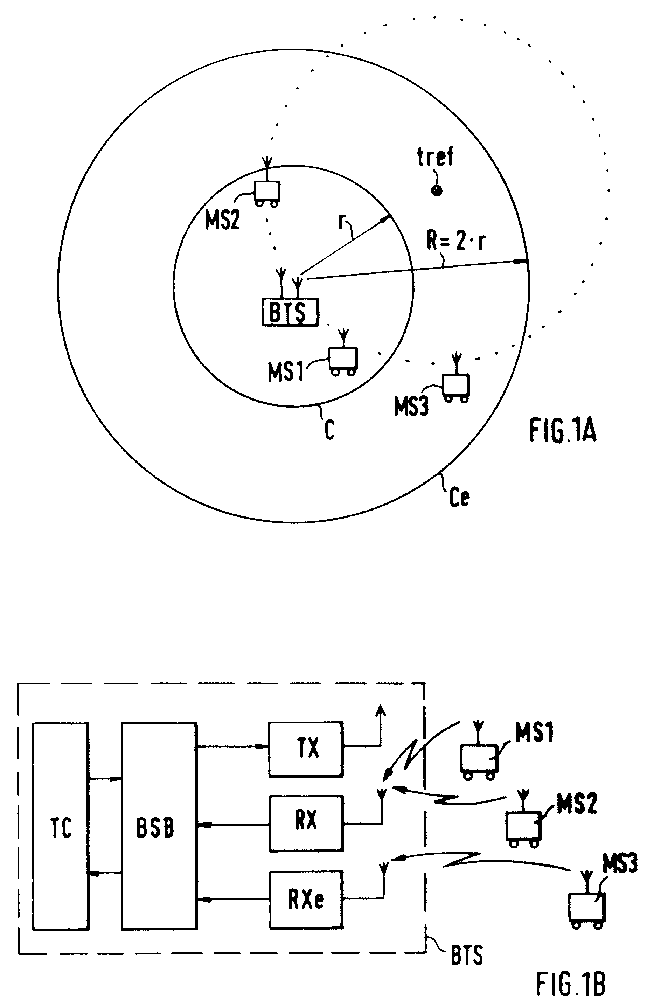

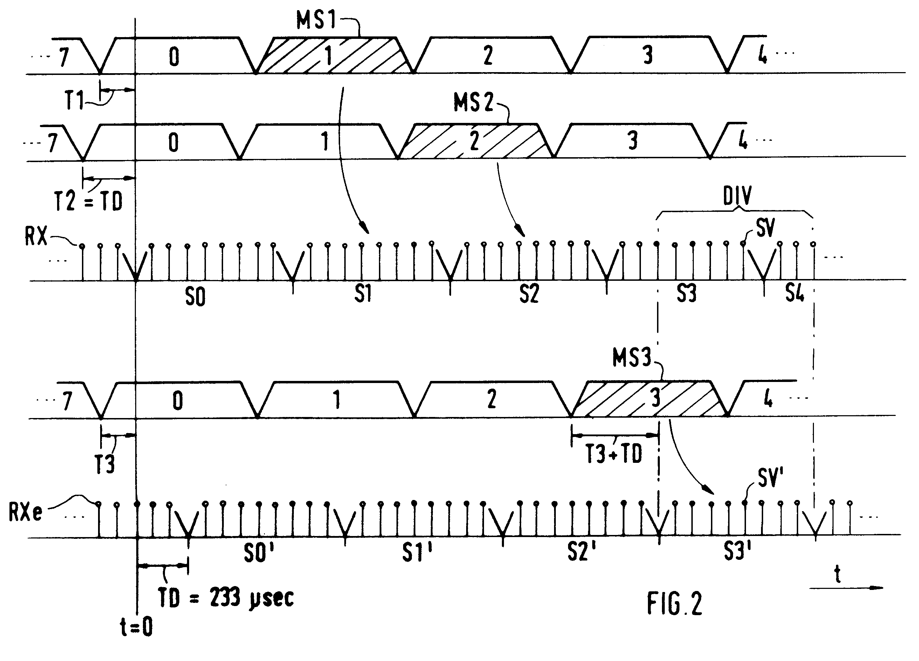

Es folgt die Beschreibung eines Ausführungsbeispiels anhand der Figuren 1a, 1b und 2, die schematisch folgendes darstellen:

Fig. 1a    zeigt eine erfindungsgemäße Funkfeststation mit erweiterter Funkzelle,

Fig. 1b    zeigt das Blockschaltbild dieser Funkfeststation und

Fig. 2    zeigt ein Zeitdiagramm für das Aussenden und das Empfangen der TDMA-Funkimpulse.

In Fig. 1a ist schematisch eine erweiterte Funkzelle CE dargestellt, die zentral von einer Funkfeststation BTS versorgt wird. Die erweiterte Funkzelle Ce hat einen Radius R und umschließt konzentrisch eine Funkzelle C mit dem Radius r. Innerhalb dieser Funkzelle C befinden sich Mobilstationen MS1 und MS2, denen jeweils ein anderer Zeitschlitz zum Senden von TDMA-Funkimpulsen zugewiesen ist. Die Mobilstationen senden in Abhängigkeit von ihrer jeweiligen Entfernung zur Funkfeststation BTS um eine Zeitspanne voreilend (Timing Advance), so daß die TDMA-Funkimpulse beim Empfang in der Funkfeststation sich überlappungsfrei in die Folge der Zeitschlitze einordnen und die Signallaufzeit innerhalb der Funkzelle C kompensiert wird. Die Mobilstationen MS1 und MS2 sind in der Lage bis zum maximal 233 $\mu$s voreilend die TDMA-Funkimpulse auszusenden. Diese Zeitspanne entspricht der maximalen Signallaufzeit, die ein Funksignal bei der Funkübertragung vom Rand der Funkzelle bis zum Standort der Funkfeststation benötigt. Die Funkzelle hat demnach einen Radius r von ca. 35 km.

Außerhalb der Funkzelle C befindet sich eine Mobilstation MS3 die gleichfalls um eine Zeitspanne zwischen 0 $\mu$s und 233 $\mu$s voreilend TDMA-Funkimpulse aussendet. Die von dieser Mobilstation gesendeten TDMA-Funkimpulse kann eine herkömmliche Funkfeststation nicht empfangen. Die im weiteren näher beschriebene erfindungsgemäße Funkfeststation BTS ist in der Lage diese TDMA-Funkimpulse innerhalb eines Empfangsradius R zu empfangen, der größer als der Radius r der Funkzelle C ist. Somit wird eine erweiterte Funkzelle Ce geschaffen, deren Radius R in diesem Beispiel gleich dem Zweifachen von r ist.

Eine Ausführung der erfindungsgemäßen Funkfeststation BTS wird im weiteren anhand der Figuren 1b und 2 beschrieben.

In Fig. 1b ist schematisch der Aufbau der Funkfeststation BTS dargestellt. Diese enthält einen Funksender TX mit einer daran angeschlossenen Sendeantenne, einem TDMA-Funkempfänger RX mit einer Empfangsantenne und einem zusätzlichen TDMA-Funkempfänger RX2 mit einer weiteren Empfangsantenne. Der Funksender TX und die beiden TDMA-Funkempfänger sind mit einer Digitalschaltung BSB verbunden, die die zu sendenden bzw. empfangenen Funksignale im Basisband verarbeitet. Die Funkfeststation BTS enthält weiterhin eine Zeitsteuerung TC, die mit der Digitalschaltung verbunden ist, und die die Zeitschlitzzuweisung für die TDMA-Funkübertragung sowie die Synchronisation steuert.

In diesem Beispiel sind die Funkfeststationen und die Mobilstationen für eine TDMA-Funkübertragung nach dem GSM-Standard ausgelegt. Die Funkfeststation teilt demnach über ihren Funksender TX den Mobilstationen die Zuweisung derjenigen Zeitschlitze mit, in denen die Mobilstationen ihre TDMA-Funksignale sendet. Die von den Mobilstationen gesendeten Funksignale werden in den beiden TDMA-Funkempfängern RX und RXe empfangen, wobei der Empfang im zusätzlichen TDMA-Funkempfänger RXe dem Empfang des TDMA-Funkempfängers RX um eine Zeitspanne nacheilt. Diese Zeitspanne entspricht der maximalen Signallaufzeit, die die Mobilfunkststationen kompensieren können. Der zeitversetzte Empfang der beiden TDMA-Funkempfänger wird durch eine zeitversetzte Abtastung der empfangenen Funksignale erreicht. Das Senden und der Empfang der TDMA-Funkimpulse wird im folgenden anhand der Fig. 2 näher beschrieben.

Fig. 2 zeigt über der Zeitachse t die Zeitintervalle, in denen die TDMA-Funkimpulse sendeseitig von den Mobilstationen gesendet und empfangsseitig von den TDMA-Funkempfängern empfangen und abgetastet werden. Als Bezugszeitpunkt $t = 0$ ist der Zeitpunkt gewählt, mit dem der Funkempfänger RX den Empfang einer Folge von Zeitschlitzen S0, S1, ..., S7 beginnt. Die Mobilstationen innerhalb der Funkzelle C senden ihre TDMA-Funkimpulse derart, daß sie sich beim Empfang im Funkempfänger RX in diese Folge von Zeitschlitzen eingliedern.

Die im folgenden beschriebenen Zeitverschiebungen beziehen sich auf Signallaufzeiten der TDMA-Funkimpulse, d.h. auf Signallaufzeiten elektromagnetischer Wellen. Die Zeitreferenz $t = 0$ ist daher so zu verstehen, als ob sie von einem Lichtsignalsender aus definiert würde, der sich im gleichen Abstand zu der Funkfeststation und den Mobilstationen befindet. Der Standort dieses fiktiven Lichtsenders ist in Fig. 1a gezeigt. Die in Fig. 1a dargestellten Abstände zwischen jeweils einer der Mobilstationen und der Funkfeststation entsprechenden in der Fig. 2 dargestellten Signallaufzeiten der verschiedenen TDMA-Funkimpulse. Die obigen Überlegungen dienen einer klaren Darstellung der zeitlichen Abläufe in Fig. 2. Sie stehen nicht im Widerspruch zu einer, wie z.B. im GSM üblich, von der Funkfeststation BTS vorgegebenen Zeitreferenz.

Nach Fig. 2 sendet die Mobilstation MS1 beispielsweise zum Zeitschlitz S1 voreilend, um eine Zeitspanne T1, die die Signallaufzeit für die Entfernung d zur Funkfeststation kompensiert. Die Mobilstation MS2, welches sich am Rand der Funkzelle C befindet, sendet zum Zeitschlitz S2 um eine Zeitspanne T2 voreilend, die die maximale Signallaufzeit TD für den Radius r der Funkzelle C kompensiert. Das Verfahren zum Rechnen dieser Zeitspannen um eine Kompensation der Signallaufzeiten zu bewirken, ist an sich beispielsweise aus dem GSM unter dem Begriff "Timing Advance Control" bekannt. Dieses Verfahren wird z.B. in dem genannten Buch "GSM" von Mouly und Pautet beschrieben.

Wie in Fig. 2 dargestellt, bewirkt die Kompensation der Signallaufzeiten, daß die von den Mobilstationen gesendeten TDMA-Funkimpulse sich überlappungsfrei in die Folge der Zeitschlitze S0 bis S7 beim Empfang im TDMA-Funkempfänger eingliedern. Fig. 2 zeigt weiterhin das Zeitintervall, in dem die Mobilfunkstation MS3 ihre TDMA-Funkimpulse aussendet. Obwohl sich diese Mobilstation außerhalb der Funkzelle C befindet wird ihr wie im GSM üblich, ein Zeitschlitz S3 innerhalb der Folge und eine Zeitspanne (Timing Advance) T3 von der Funkfeststation zugewiesen.

Dadurch sendet diese Mobilstation MS3 zu einem Zeitintervall, das bezogen auf die Zeitreferenz t = 0, die auch den Empfangsbeginn der Folge Zeitschlitzen S0 - S7 innerhalb des Funkempfängers RX kennzeichnet um eine Zeitspanne T3 voreilt. Demnach wird auch für solche Mobilstationen MS3, die sich außerhalb der (normalen) Funkzelle C befinden eine Zeitsteuerung (Timing Advance Control) angewendet, wie für die (normalen) Mobilstationen innerhalb der Funkzelle.

Um nun die gesendeten TDMA-Funkimpulse von diesen Mobilstationen, die außerhalb der normalen Funkzelle C sich befinden, zu empfangen, empfängt der zusätzliche Funkempfänger RXe zeitversetzt zum (normalen) Funkempfänger RX. Wie in Fig. 2 gezeigt, tastet der zusätzliche Funkempfänger RXe um eine Zeitspanne TD nacheilend die empfangenden Funksignale ab. Diese Zeitspanne TD ist beispielsweise 233 $\mu$s lang und entspricht der maximalen Signallaufzeit innerhalb der Funkzelle C. Dadurch ist die empfangene Folge von Zeitschlitzen S0', S01', ... bis S07' im zusätzlichen Empfänger RXe so zeitversetzt, daß sich TDMA-Funkimpulse die weiter entfernte Mobilstation (wie hier MS3) mit einem üblichen Timing Advance aussenden, zeitrichtig empfangen und abgetastet werden. Die Funkfestationen versorgt demnach eine auf den Radius R = 2r erweiterte Funkzelle Ce.

Die Funkfeststation ist somit in der Lage unter Beibehaltung des üblichen Verfahrens zur Zeitsteuerung (Timing Advance Control) eine erweiterte Funkzelle Ce zu versorgen, innerhalb der die Mobilstationen nur Signallaufzeiten kompensieren müssen, die kleiner gleich der maximalen Signallaufzeit TD sind. Die maximale Signallaufzeit TD ist im allgemeinen durch Systemvorgaben begrenzt, wie hier z.B. durch eine 6-bit-Kodierung des Timing Advance auf TD = 233 $\mu$s.

Um eine Überlappung der TDMA-Funkimpulse auf der Empfangsseite an der Funkfeststation zu vermeiden, weist die Zeitsteuerung TC den Mobilstationen die Zeitschlitze wie folgt zu:

Den Mobilstationen innerhalb der Funkzelle werden zueinander benachbarte Zeitschlitze innerhalb der Folge zugewiesen, wie hier z.B. S1 und S2. Ebenso werden den Mobilstationen im erweiterten Bereich der Funkzelle benachbarte Zeitschlitze zugewiesen. Dadurch wird vermieden, daß die TDMA-Funkimpulse von nahen und fernen Mobilstationen alternierend an der Funkfeststation eintreffen, wodurch sich die TDMA-Funkimpulse empfangsseitig überlappen würden. Eine derartige Überlappung wäre z.B. dann gegeben, wenn den Mobilstationen innerhalb der Funkzelle die Zeitschlitze mit den geraden Ordnungsnummern S0, S2, S4 usw. zugeteilt würden und den Mobilstationen in den Erweiterungsbereich die Zeitschlitze mit den ungeraden Ordnungsnummern S1, S3, S5 usw. zugeteilt würden. Wie anhand von Fig. 2 zu sehen wäre dann eine Überlappung eines im Zeitschlitzes S3' empfangenen Funkimpulses und eines im Zeitschlitz S4 empfangenen Funkimpulses gegeben.

In diesem Beispiel jedoch weist die Funkfeststation BTS den Mobilstationen innerhalb der Funkzelle und außerhalb der Funkzelle C jeweils benachbarte Funkzeitschlitze so zu, daß die Mobilstationen innerhalb der Funkzelle C Zeitschlitze mit niedrigerer Ordnungszahl erhalten, als die Mobilstationen außerhalb der Funkzelle. Dadurch gibt es innerhalb der Folge der Zeitschlitze S0 bis S7 nur zwei Übergänge zwischen dem Empfang der TDMA-Funksignale, welche die weniger oder die weiter entfernten Mobilstationen aussenden. Somit erreicht die gezeigte Zeitschlitzzuweisung eine möglichst effiziente Zeitkanalausnutzung.

In der hier beschriebenen Ausgestaltung der Erfindung werden alle Funkzeitschlitze zur Nachrichtenübertragung genutzt, d.h. sie sind sogenannte Verkehrskanäle. Wird jedoch etwa der Funkzeitschlitz so zur Signalisierung, insbesondere zum Verbindungsaufbau als sogenannter RACCH (Random Access Chanel) genutzt, sollte der nachfolgende Funkzeitschlitz S1 freigehalten werden. Dadurch wird eine Kollision von Signalisierungs-Funkimpulsen (Random Access Burst), die weiter entfernte Mobilstationen aussenden, mit Verkehrs-Funkimpulsen (Traffic Burst), die andere Mobilstationen aussenden, vermieden.

Die hier beschriebene Funkfeststation BTS ist in der Lage, nach dem Diversity-Empfangsprinzip, die auf den verschiedenen Empfangszweigen (RX und RXe) empfangenen TDMA-Funksignale miteinander zu korrelieren. Beispielsweise wird hier der im Zeitschlitz S3' über den Funkempfänger RXe empfangende TDMA-Funkimpuls ebenfalls in einem Zeitintervall DIV über den Funkempfänger RX empfangen. Dieses Zeitintervall DIV deckt bezogen auf den Empfangszweig RX Teilbereiche der Zeitschlitze S3 und S4 ab. Da jeder der beiden Empfangszweige über eine separate Empfangsantenne und über den entsprechenden TDMA-Funkempfänger verfügt, wird durch Korrelation der Abtastwerte aus beiden Empfangszweigen innerhalb der Basisbandverarbeitung ein Diversity-Empfangssignal gebildet. Wichtig hierbei ist die Zuordnung von zeitgleich abgetasteten Abtastwerten SV, SV'. Somit ist die Funkfeststation BTS zur Kompensation vom Mehrwegeempfang geeignet.

Die beschriebene Funkfeststation BTS mit der beschriebenen erweiterten Funkzelle ist eine mögliche Ausführungsform der Erfindung. Denkbar ist auch eine erweiterte Funkzelle, die aus mehreren ringartigen Erweiterungszonen gebildet wird, wobei diese jeweils eine maximale radiale Ausdehnung haben, die der maximal zulässigen Signallaufzeit im System entspricht. Dadurch können herkömmliche Mobilstationen sich in der erweiterten Funkzelle so bewegen und mit der Funkfeststation so kommunizieren, wie in einer herkömmlichen und räumlich begrenzten Funkzelle. Die Erfindung wurde am Beispiel eines Mobilfunksystems beschrieben. Denkbar sind auch Ausführungsformen für zellulare Funknetze mit stationären entfernten Stationen, sogenannten fixed wireless radio networks. Die Erfindung erlaubt eine großflächige Ausdehnung der Funkzellen, was zu einer Reduzierung der Gesamtanzahl der Funkfeststationen im System führt. Dadurch ist eine Reduzierung der Infrastrukturkosten gegeben.

Die Erfindung ist auch für zellulare Gebäudefunknetze wie z.B. DECT (Digital European Cordless Telephone) einsetzbar. Die vorgeschlagene Funkfeststation erlaubt eine einfache und schnelle Erweiterung von bereits vorhandenen Funkzellen. Dadurch ist eine sehr flexible Funknetzplanung möglich.

**Patentansprüche**

1. Funkfeststation (BTS) für ein zellulares Funknetz, die für eine Funkzelle (C) einen TDMA-Funkempfänger (RX) enthält, der auf mindestens einer Trägerfrequenz innerhalb einer Folge von Zeitschlitzen (S0, S1, ..., S7) TDMA-Funkimpulse (bursts) empfängt, die mindestens eine Mobilstation (MS1) bezogen auf einen der Zeitschlitze (S1) voreilend um eine Zeitspanne (T1) aussendet, die zum Ausgleich der Signallaufzeit des TDMA-Funkimpulses mit der Entfernung zur Funkfeststation (BTS) wächst bis zu einer maximalen Zeitspanne (TD), die der maximalen Signallaufzeit innerhalb der Funkzelle (C) entspricht,
**dadurch gekennzeichnet,** daß die Funkfeststation (BTS) mindestens einen zusätzlichen TDMA-Funkempfänger (RXe) enthält, der auf der mindestens einen Trägerfrequenz, jedoch innerhalb einer um zumindest die maximale Zeitspanne (TD) nacheilenden Folge von Zeitschlitzen (S0', S1', ..., S7') empfängt, daß die Funkfeststation (BTS) mittels einer TDMA-Zeitsteuerung (TC) und mittels eines Funksenders (TX) den Mobilstationen innerhalb (MS1, MS2) und außerhalb der Funkzelle (C) zum Senden der TDMA-Funkimpulse jeweils solche der Zeitschlitze (S1, S2) zuweist, die zueinander benachbart sind, wodurch die Funkfeststation (BTS) die TDMA-Funkimpulse möglichst vieler Mobilstationen innerhalb einer erweiterten Funkzelle (Ce) empfängt.

2. Funkfeststation (BTS) nach Anspruch 1, gekennzeichnet durch, eine den TDMA-Funkempfängern (RX, RXe) nachgeschaltete Digitalschaltung (BSB), die die in den entsprechenden Empfangszweigen empfangenen TDMA-Funkimpulse abtastet und miteinander korreliert (DIV), wodurch die Funkfeststation (BTS) nach dem Diversity-Prinzip empfängt.

3. Funkfeststation (BTS) nach Anspruch 1, dadurch gekennzeichnet, daß die Funkfeststation die erweiterte Funkzelle zentral versorgt und n (n>1) der zusätzlichen Funkempfänger enthält, von denen der i-te Funkempfänger (i laufender Index von 1 bis n) um das i-fache der maximalen Zeitspanne nacheilend empfängt, so daß die erweiterte Funkzelle konzentrisch in i+1 Zonen aufgeteilt ist, die gleich große radiale Ausdehnungen (r) entsprechend der maximalen Zeitspanne (TD) haben, und so daß jede Mobilstation lediglich die Signallaufzeit innerhalb der Zone ausgleicht.

4. TDMA-Zeitsteuerung (TC) zur Steuerung einer Funkfeststation (BTS) für ein zellulares Funknetz, die für eine Funkzelle (C) einen TDMA-Funkempfänger (RX) enthält, der auf mindestens einer Trägerfrequenz innerhalb einer Folge von Zeitschlitzen (S0, S1, ..., S7) TDMA-Funkimpulse (bursts) empfängt, die mindestens eine Mobilstation (MS1) bezogen auf einen der Zeitschlitze (S1) voreilend um eine Zeitspanne (T1) aussendet, die zum Ausgleich der Signallaufzeit des TDMA-Funkimpulses mit der Entfernung zur Funkfeststation (BTS) wächst bis zu einer maximalen Zeitspanne (TD), die der maximalen Signallaufzeit innerhalb der Funkzelle (C) entspricht,
**dadurch gekennzeichnet,** daß die TDMA-Zeitsteuerung (TC) zur Steuerung der Funkfeststation (BTS), die mindestens einen zusätzlichen TDMA-Funkempfänger (RXe) enthält, der auf der mindestens einen Trägerfrequenz, jedoch innerhalb einer um zumindest die maximale Zeitspanne (TD) nacheilenden Folge von Zeitschlitzen (S0', S1', ..., S7') empfängt, mittels eines Funksenders (TX) den Mobilsationen innerhalb (MS1, MS2) und außerhalb der Funkzelle (C) zum Senden der TDMA-Funkimpulse jeweils solche der Zeitschlitze (S1, S2) zuweist, die zueinander benachbart sind, wodurch die Funkfeststation (BTS) die TDMA-Funkimpulse möglichst vieler Mobilstationen innerhalb einer erweiterten Funkzelle (Ce) empfängt.

FIG.1A

FIG.1B

FIG.2